# EUROPÄISCHE PATENTSCHRIFT

(11) **EP 3 352 319 B1**
(45) Veröffentlichungstag und Bekanntmachung des Hinweises auf die Patenterteilung: **21.07.2021**
(21) Anmeldenummer: 18151635.2
(22) Anmeldetag: 15.01.2018
(51) Int. Cl.: H02J 1/14, H02J 3/14

(54) **VERFAHREN ZUM BETREIBEN EINER ANLAGE**
METHOD FOR OPERATING A SYSTEM
PROCÉDÉ DE FONCTIONNEMENT D'UNE INSTALLATION

(30) Priorität: 20.01.2017 DE 102017101138
(43) Veröffentlichungstag der Anmeldung: 25.07.2018
(73) Patentinhaber: AVL Emission Test Systems GmbH, 41460 Neuss (DE)
(72) Erfinder: DICKOW, Achim, 42555 Velbert (DE); AKSOY, Yasar, 41812 Erkelenz (DE); BOLLEN, Frank, 47475 Kamp-Lintfort (DE); GARTHE, Christopher, 41564 Kaarst (DE)
(74) Vertreter: terpatent Patentanwälte ter Smitten Eberlein-Van Hoof Rütten Daubert

(56) Entgegenhaltungen:
- EP-A1- 0 577 561
- DE-A1-102004 046 758
- DE-A1-102010 039 179
- JP-A- 2002 071 527
- US-A1- 2013 312 486

## Beschreibung

Die Erfindung betrifft ein Verfahren zum Betreiben einer Anlage mit einer Anzahl an Verbrauchern, wobei der Stromverbrauch der einzelnen Verbraucher überwacht wird und die Energieversorgung der Verbraucher gesteuert wird..

Eine Anlage weist üblicherweise eine Vielzahl an Verbrauchern auf, die in Abhängigkeit von den Betriebsmodi der Anlage angesteuert und mit elektrischem Strom versorgt werden. So weisen beispielsweise Gasanalyseanlagen unterschiedliche Analyseeinheiten sowie zur Messgasaufbereitung benötigte Komponenten, wie beispielsweise Filter, Pumpen und Ventile, auf. Um den Energiebedarf einer derartigen Anlage insbesondere Gasanalyseanlage zu steuern, ist es bekannt, den Stromverbauch der einzelnen Verbraucher zu überwachen und die Energieversorgung der Verbraucher zu steuern.

Die JP 2014-092502 A und die JP 2002071527 A offenbaren beispielsweise Abgasanalysesysteme mit einer oder mehreren Analyseeinheiten und einer Aufheizeinheit zum Aufheizen der Analyseeinheiten und/oder einer Abgasleitung des Abgasanalysesystems. Beim Hochfahren des Abgasanalysesystems werden die Verbraucher zeitlich gesteuert hochgefahren. Dabei wird zunächst die Aufheizeinheit hochgefahren, mit einem zeitlichen Verzug die Abgasleitung über ein Ventil freigegeben, und wiederum mit einem zeitlichen Verzug die Abgasanalyse durch die mindestens eine Analyseeinheit gestartet. Durch ein derartiges zeitlich versetztes Bestromen der Verbraucher wird der Gesamtenergiebedarf der Anlage reduziert, indem in vordefinierten Zeitintervallen ausschließlich die Verbraucher bestromt werden, die auch tatsächlich zum Betreiben der Anlage in den jeweiligen vordefinierten Zeitintervallen erforderlich sind.

Nachteilhaft an einer in der JP 2014-092502 A und in der JP 2002071527 A beschriebenen Ausführung der Anlage ist, dass die Verbraucher zeitlich gesteuert hochgefahren werden, wodurch zwar der Energieverbrauch der Anlage reduziert wird, jedoch weiterhin Energiebedarfsspitzen auftreten können, die zu einer aufwendigen und kostenintensiven Ausgestaltung der Anlage führen. Die Energiebedarfsspitzen treten auf, wenn mehrere Verbraucher, insbesondere wenn mehrere Verbraucher mit einem hohen Energiebedarf, beispielsweise zwei Aufheizeinheiten, gleichzeitig aktiv sind. Außerdem weist eine in der JP 2014-092502 A und in der JP 2002071527 A beschriebenen Ausführung der Anlage eine längere Hochfahrdauer auf, da die Verbraucher über festgelegte Zeitdauern und unabhängig vom tatsächlichen Bedarf bestromt werden, wobei die Zeitdauer entsprechend lang gewählt ist, um die vordefinierte Temperatur in jedem Fall zu erreichen.

Zusätzlich ist aus der EP 0 577 561 A1 ein Gerät zum Zubereiten von heißen Getränken bekannt, bei dem je nach Leistungsanforderung und bestehender Temperaturdifferenz zwischen Solltemperatur und Isttemperatur der bis zu drei Heizelementen diese priorisiert angesteuert werden, falls die zur Verfügung stehende Leistung kleiner ist als die notwendige Leistung zum Beheizen aller drei Heizelemente.

Des Weiteren ist aus der US 2013/0312486 A1 eine Abgasanalyseeinheit bekannt, bei der in unterschiedlichen Betriebsmodi verschiedene Schaltkreise angesteuert werden.

Die Aufgabe der Erfindung ist es daher, eine Anlage derart weiterzuentwickeln, dass die Energiebedarfsspitzen der Anlage zuverlässig vermieden werden und die Hochfahrdauer reduziert wird.

Diese Aufgabe wird durch das erfindungsgemäße Verfahren zum Betreiben einer Anlage nach Anspruch 1 gelöst.

Dadurch, dass mehrere erste Verbraucher einem ersten Schaltkreis zugeordnet werden und mehrere zweite Verbraucher einem zweiten Schaltkreis zugeordnet werden, wobei bei Anforderung einer Bestromung beider Schaltkreise priorisiert der erste Schaltkreis aktiviert wird und erst bei Unterschreiten eines vordefinierten Schwellenwertes eines elektrischen Regelwerts des ersten Schaltkreises der zweite Schaltkreis aktiviert wird, wobei die Anlage die Bestandteile eines Abgases analysiert, indem über Ventile der Massenstrom des Abgases oder anderer zur Analyse des Abgases benötigter Gase geregelt wird, über Pumpen die Abgase durch die Leitung der Anlage gefördert werden und über Messgeräte die Bestandteile des Abgases analysiert werden, können Energiebedarfsspitzen einfach vermieden werden, indem die Schaltkreise in einer vordefinierten Reihenfolge und abhängig voneinander aktiviert und die Verbraucher in dieser Reihenfolge mit elektrischer Energie versorgt werden. Die Analyse der Abgase ist ein wichtiger Bestandteil bei der Entwicklung von Verbrennungsmotoren und bei der Freigabe von Kraftfahrzeugen, wobei die einzelnen Bestandteile des Abgases, wie beispielsweise Kohlenwasserstoffe, Stickoxide oder Kohlendioxide, über unterschiedliche Messgeräte analysiert werden. Außerdem weist eine derartige Anlage zur Analyse der Bestandteile des Abgases Komponenten zur Messgasaufbereitung auf. Dazu zählen beispielsweise die Filter, Pumpen oder Ventile. Dadurch, dass die Aktivierung und Bestromung des zweiten Schaltkreises von dem vordefinierten Schwellenwert des elektrischen Regelwertes des ersten Schaltkreises abhängt, werden die Verbraucher bedarfsgerecht bestromt, wodurch die Hochfahrdauer verkürzt wird. Außerdem wird dadurch ein vordefinierter Höchstbedarfswert der Anlage nicht überschritten und die Energiebedarfsspitzen vermieden. Um eine derartige voneinander abhängige Aktivierung der Schaltkreise zu realisieren, weisen die Schaltkreise üblicherweise eine Leistungsmessung und eine Regelung auf. Des Weiteren können auf diese Weise Baugruppen aus mehreren Verbrauchern priorisiert bestromt werden oder abgeschaltet werden, wenn diese nicht benötigt werden. So können die Verbraucher, die in vordefinierten Betriebsmodi nicht gebraucht werden, energetisch runtergefahren werden.

Vorzugsweise werden die zwei Schaltkreise über jeweils eine Steuerungseinheit aktiviert, wobei der elektrische Regelwert des jeweiligen Schaltkreises überwacht und gesteuert wird. So erfolgt unter anderem die Ermittlung des elektrischen Regelwerts, die Aufbereitung des elektrischen Regelwertes, die Aktivierung bzw. Deaktivierung der einzelnen Schaltkreise und die Überwachung der Schaltkreise über lediglich eine einzige Steuerungseinheit je Schaltkreis.

In einer bevorzugten Ausgestaltung wird bei einem Kaltstart die Anlage aufgeheizt, indem priorisiert der erste Schaltkreis, der einen Heizkreis aufweist, aktiviert wird und bei Unterschreiten des vordefinierten Schwellenwertes des elektrischen Regelwerts des ersten Schaltkreises der zweite Schaltkreis aktiviert wird. Die Anlagen aus dem Stand der Technik weisen üblicherweise einen Hochfahrvorgang auf, in dem die Verbraucher hochgefahren und in einer Aufheizphase auf eine vordefinierte Soll-Temperatur erwärmt werden. Damit die Soll-Temperatur schnellstmöglich erreicht wird, wird in der Aufheizphase der erste Schaltkreis mit einem maximalen elektrischen Strom bestromt, woraus in Kombination mit anderen ebenfalls bestromten Verbrauchern Strombedarfsspitzen der Anlage resultieren. Um dies zu vermeiden, wird zunächst ausschließlich der erste Schaltkreis bestromt und durch das Unterschreiten des vordefinierten Schwellenwertes des elektrischen Regelwerts des ersten Schaltkreises der zweite Schaltkreis, der andere Verbraucher aufweist, bestromt. Der elektrische Regelwert des ersten Schaltkreises sinkt aufgrund einer Temperaturregelung, wobei der elektrische Regelwert mit der sinkenden Temperaturdifferenz zwischen Ist- und Soll-Temperatur der Verbraucher sinkt. Auf diese Weise werden Energiebedarfsspitzen während dem Hochfahrvorgang der Anlage vermieden, wodurch die Kosten der Anlage reduziert werden.

Vorzugsweise regelt ein Heizsteuergerät den Heizkreis, indem die zum Betreiben des Heizkreises benötigte Gleichspannung abhängig von der benötigten Heizleistung variiert wird. In dem Heizsteuergerät wird eine Soll-Temperatur der beheizten Verbraucher hinterlegt, die mit einer IstTemperatur verglichen und diese über die Steuerung der zum Betreiben des Heizkreises benötigte Gleichspannung an die Soll-Temperatur angeglichen wird. Auf diese Weise wird der Heizkreis bedarfsgerecht bestromt und die beheizten Verbraucher konstant auf der Soll-Temperatur gehalten, sobald diese erreicht ist.

In einer bevorzugten Ausgestaltung bleibt in einer Stand-By-Phase der Anlage der erste Schaltkreis aktiviert und der zweite Schaltkreis wird deaktiviert. In der Stand-By-Phase sind nahezu alle Verbraucher abgeschaltet, wobei einige Verbraucher auch in der Stand-By-Phase mit elektrischem Strom versorgt werden, da ein Abschalten dieser Verbraucher nachteilhaft wäre. Somit sind dem ersten Schaltkreis wärmeempfindliche und dauerhaft mit elektrischer Energie zu versorgende Verbraucher, beispielsweise Messverstärker oder langsame Temperaturregler, zugeordnet, während die dem zweiten Schaltkreis zugeordneten Verbraucher durch das Deaktivieren des zweiten Schaltkreises abgeschaltet werden können. Dadurch können auf eine einfache Weise Verbraucher abgeschaltet werden und andere Verbraucher, die beispielsweise wärmeempfindlich sind und konstant betrieben werden müssen, weiter bestromt werden.

Vorzugsweise bleibt beim Umschalten von der Stand-By-Phase in eine Betriebsphase der erste Schaltkreis aktiviert und beim Unterschreiten des vordefinierten Schwellenwertes des elektrischen Regelwerts des ersten Schaltkreises wird der zweite Schaltkreis aktiviert. Dadurch werden auch Energiebedarfsspitzen vermieden, wenn von der Stand-By-Phase in die Betriebsphase umgeschaltet wird.

Vorzugsweise wird über eine Messung des elektrischen Regelwerts der Schaltkreise der Lüftungsbedarf der Anlage ermittelt, welcher über einen den Lüftungsbedarf regelnden Schaltkreis geregelt wird. So kann auf eine einfache und kostengünstige Weise die für die ordnungsgemäße Funktion der Anlage erforderliche Kühlung gesteuert werden.

In einer bevorzugten Ausgestaltung weist die Anlage mindestens drei Schaltkreise mit mindestens einem Verbraucher auf, wobei die Schaltkreise bei Anforderung einer Bestromung aller Schaltkreise nacheinander und in Abhängigkeit der elektrischen Regelwerte aktiviert werden. Auf diese Weise können große Anlagen mit vielen Verbrauchern betrieben werden, ohne Strombedarfsspitzen zu verursachen.

Vorzugsweise werden die Verbraucher mit einer Gleichspannung von 24V oder 48V Gleichspannung versorgt, wobei die Verbraucher bevorzugt über Weitebereichsnetzteile mit elektrischer Energie versorgt werden. Eine Anlage wird üblicherweise für den weltweiten Vertrieb konzipiert, wobei die Stromnetze in unterschiedlichen Ländern unterschiedliche Netzspannungen und Frequenzen aufweisen, sodass die Anlage abhängig vom Land, in dem die Anlage eingesetzt werden soll, angepasst werden muss. Um eine derartige Anpassung zu vermeiden, wird die Spannungsversorgung der einzelnen Verbraucher auf 24V oder 48V festgelegt. Hierbei werden sogenannte Weitebereichsnetzteile eingesetzt, die die durch das Stromnetz zur Verfügung gestellte Spannung in eine vordefinierte Spannung, beispielsweise in 24V oder 48V, umwandeln. Auf diese Weise können die Anlagen unabhängig von der durch das Stromnetz zur Verfügung gestellten Spannung betrieben werden. Alternativ könnten auch einige Verbraucher mit Gleichstrom und die anderen Verbraucher mit Netzstrom versorgt werden.

Es wird somit ein Verfahren zum Betreiben einer Anlage bereitgestellt, mit dem Energiebedarfsspitzen auf eine einfache und kostengünstige Weise zuverlässig vermieden werden.

Nachfolgend wird die Erfindung anhand einer bevorzugten Ausführung unter Bezugnahme auf die anliegenden Zeichnungen näher erläutert.
Figur 1 zeigt schematisch eine Zusammensetzung einer Anlage, und
Figur 2 zeigt einen Schaltplan der in Figur 1 dargestellten Anlage.

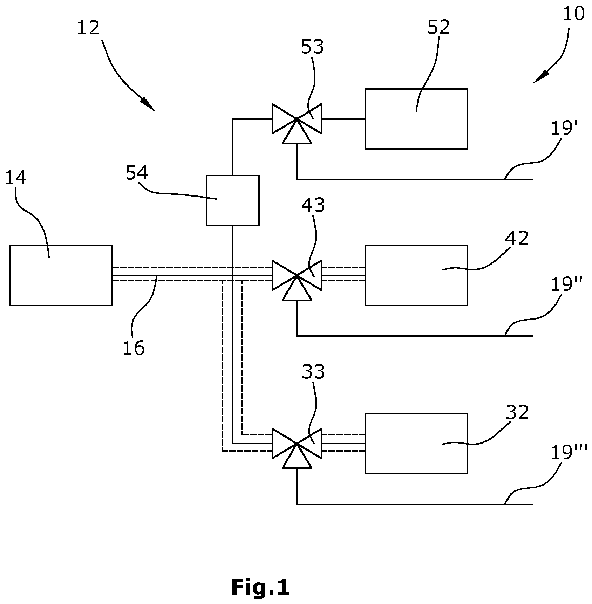

Figur 1 zeigt schematisch eine Anlage 10, die in der vorliegenden Ausführung eine Abgasmessanlage 12 ist, wobei durch die Abgasmessanlage 12 die Anteile der einzelnen Bestandteile des Abgases ermittelt werden. Die Abgasmessanlage 12 weist eine Messgasentnahmevorrichtung 14 auf, die über eine Messgasleitung 16 mit einem ersten elektrischen Verbraucher 32, einem zweiten elektrischen Verbraucher 42 und einem dritten elektrischen Verbraucher 52 fluidisch verbunden ist.

Der erste Verbraucher 32 ist ein Flammenionisationsdetektoranalysegerät und dient zum Bestimmen des Kohlenwasserstoffanteils im Abgas, wobei die im Abgas enthaltenen Kohlenwasserstoffe bereits bei Temperaturen unterhalb von 170 °C kondensieren und dadurch das System verschmutzen und die Messungen verfälschen. Aus diesem Grund werden die Messgasleitung 16 sowie das Flammenionisationsdetektoranalysegerät beheizt, so dass die Temperatur des Abgases nicht unter 170 °C fällt.

Der zweite Verbraucher 42 ist ein Chemilumineszenzdetektor und dient zum Bestimmen der Stickoxid- und Stickdioxidanteile im Abgas. Der zweite Verbraucher 42 wird ebenfalls beheizt, wodurch eine Kondensation des im Abgas gelösten Wassers vermieden wird. Durch das Beheizen des Verbrauchers wird die Temperatur des Abgases über dem Taupunkt des Abgases, der typischerweise bei ca. 40 - 55 °C liegt, gehalten.

Der dritte Verbraucher 52 ist ein Infrarotdetektoranalysegerät und dient zum Bestimmen der Kohlenmonoxid- und Kohlendioxidanteile im Abgas. Der im Abgas gelöste Wasserdampf beeinflusst bei der Bestimmung der Kohlenmonoxid- und Kohlendioxidanteile die Messergebnisse, weshalb dem dritten Verbraucher 52 ein Kühler 54 vorgeschaltet ist. Der Kühler kühlt das Abgas auf ca. 4 °C, wobei das aus dem Wasserdampf kondensierte Wasser aus dem Kühler 54 abgeführt wird.

Die Abgasmessanlage 12 weist außerdem ein dem ersten Verbraucher 32 zugeordnetes erstes Ventil 33, ein dem zweiten Verbraucher 42 zugeordnetes zweites Ventil 43 und ein dem dritten Verbraucher 52 zugeordnetes drittes Ventil 53 auf, wobei über die Ventile 33, 43, 53 jeweils der durch die Messgasleitung 16 strömende Messgasmassenstrom sowie der durch Kalibriergasleitungen 19', 19", 19'" strömende Kalibiergasmassenstrom zu den jeweiligen Verbrauchern 32, 42, 52 geregelt wird.

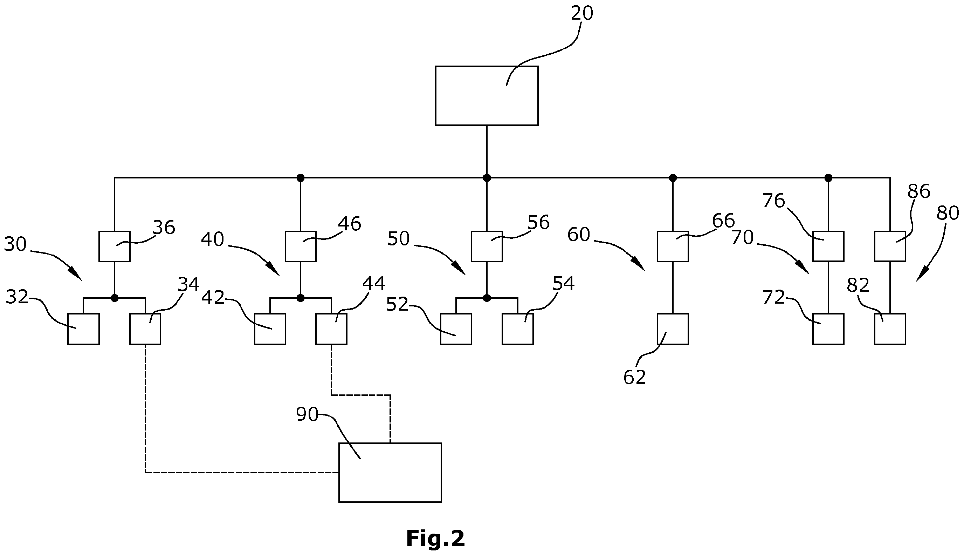

In Figur 2 ist ein Schaltplan der Abgasmessanlage 12 gezeigt, wobei die Abgasmessanlage 12 sechs Schaltkreise 30, 40, 50, 60, 70, 80 aufweist.

Der erste Schaltkreis 30 weist den ersten Verbraucher 32 und einen dem ersten Verbraucher 32 zugeordneten ersten Heizkreis 34 auf, wobei über den ersten Heizkreis 34 die Messgasleitung 16 sowie der erste Verbraucher 32 aufgeheizt werden. Der erste Schaltkreis 30 ist über eine erste Steuerungseinheit 36 aktivierbar, wobei über die erste Steuerungseinheit 36 der erste Verbraucher 32 und der dem ersten Verbraucher 32 zugeordnete erste Heizkreis 34 mit elektrischem Strom versorgt werden. Dabei überwacht und steuert die erste Steuerungseinheit 36 den in den ersten Schaltkreis 30 fließenden elektrischen Strom.

Der zweite Schaltkreis 40 weist den zweiten Verbraucher 42 und einen dem zweiten Verbraucher 42 zugeordneten zweiten Heizkreis 44 auf, wobei über den zweiten Heizkreis 44 der zweite Verbraucher 42 und die Messgasleitung 16 aufgeheizt wird. Der zweite Schaltkreis 40 ist über eine zweite Steuerungseinheit 46 aktivierbar und mit der zentralen Stromversorgungseinheit 20 elektrisch verbunden, wobei der in den zweiten Schaltkreis 40 fließende elektrische Strom durch die zweite Steuerungseinheit 46 überwacht und gesteuert wird.

Der dritte Schaltkreis 50 weist einen dritten Verbraucher 52 und einen Kühler 54 auf. Der dritte Schaltkreis 50 ist über eine dritte Steuerungseinheit 56 aktivierbar und mit der zentralen Stromversorgungseinheit 20 elektrisch verbunden, wobei der in den dritten Schaltkreis 50 fließende elektrische Strom durch die dritte Steuerungseinheit 56 überwacht und gesteuert wird.

Der vierte Schaltkreis 60 weist ein dem ersten Verbraucher 32 zugeordnetes erstes Ventil 62, der fünfte Schaltkreis 70 ein dem zweiten Verbraucher 42 zugeordnetes zweites Ventil 72 und der sechste Schaltkreis 80 ein dem dritten Verbraucher 52 zugeordnetes drittes Ventil 82 auf. Der vierte, fünfte und sechste Schaltkreis 60, 70, 80 sind über jeweils eine Steuerungseinheit 66, 76, 86 mit der zentralen Stromversorgungseinheit 20 elektrisch verbunden.

Die Abgasmessanlage 12 weist mehrere Betriebsmodi auf, wobei in Abhängigkeit von dem Betriebsmodus mehrere Schaltkreise 30, 40, 50, 60, 70, 80 aktiviert werden. Die Abgasmessanlage 12 weist beispielsweise eine Aufheizphase auf, in der die Messgasleitung 16 und abhängig davon, welche Bestandteile des Abgases gemessen werden sollen, der erste und/oder der zweite Verbraucher 32, 42 aufgeheizt werden. Sollen beispielsweise die Kohlenwasserstoffanteile und die Stickoxid- und Stickdioxidanteile im Abgas gemessen werden, müssen der erste Schaltkreis 30, der zweite Schaltkreis 40 sowie das erste Ventil 62 und das zweite Ventil 72 bestromt werden. Erfindungsgemäß wird zunächst der erste Schaltkreis 30 über die erste Steuerungseinheit 36 freigegeben und mit elektrischem Strom versorgt, da der Aufheizvorgang des ersten Verbrauchers 32 auf eine Temperatur oberhalb von 170 °C länger dauert als der Aufheizvorgang des zweiten Verbrauchers 42 auf ca. 50 °C. Dabei wird der gesamte zur Verfügung stehende Strom zum Aufheizen der ersten Verbraucher 32 verwendet, so dass die vordefinierte Temperatur des ersten Verbrauchers 32 schnellstmöglich erreicht wird. Dem ersten Schaltkreis 30 können ggfs. noch andere Verbraucher, beispielsweise empfindliche Messgasverstärker oder Sensoren zugeordnet sein, die frühzeitig bestromt werden müssen, um stabil arbeiten zu können. Alle anderen Schaltkreise 40, 50, 60, 70, 80 sind zunächst deaktiviert und die gesamte elektrische Energie wird zum Aufheizen der Messgasleitung 16 und des ersten Verbrauchers 32 verwendet. Sobald sich die Temperatur des ersten Verbrauchers 32 der vordefinierten Temperatur annähert, sinkt der elektrische Regelwert des ersten Schaltkreises 30, wobei die Regelung des Heizkreise 34, 44 über ein Heizsteuergerät 90 erfolgt. Sobald der elektrische Regelwert des ersten Schaltkreises 30 unterhalb eines vordefinierten Schwellenwertes des elektrischen Regelwertes absinkt, wird der zweite Schaltkreis 40 über die zweite Steuerungseinheit 46 aktiviert und der zweite Verbraucher 42 auf die Temperatur von ca. 50 °C erwärmt.

An die Aufheizphase schließt eine Messphase an, wobei der vierte und fünfte Schaltkreis 60, 70 aktiviert werden, sobald die elektrischen Regelwerte des zweiten Schaltkreises 40 unterschritten sind, so dass die Ventile 62, 72 geöffnet und der Messgasmassenstrom zu dem ersten Verbraucher 32 und dem zweiten Verbraucher 42 freigeben werden.

Die Abgasmessanlage 12 weist außerdem eine Stand-by-Phase auf. In der Stand-by-Phase ist der erste Schaltkreis 30 aktiviert und die anderen Schaltkreise 40, 50, 60, 70, 80 deaktiviert. Dem ersten Schaltkreis 30 sind wärmeempfindliche und dauerhaft mit elektrischer Energie zu versorgende Verbraucher, beispielsweise Messverstärker oder langsame Temperaturregler, zugeordnet. Die anderen Verbraucher sind den anderen Schaltkreisen 40, 50, 60, 70, 80 zugeordnet und somit in der Stand-by-Phase abgeschaltet.

Durch ein derartiges Verfahren werden Strombedarfsspitzen der Anlage zuverlässig vermieden und dadurch die Kosten der Anlage reduziert sowie die Hochfahrdauer reduziert.

Es sollte deutlich sein, dass der Schutzbereich des vorliegenden Hauptanspruchs nicht auf das beschriebene Ausführungsbeispiel der Anlage begrenzt ist. Derartige Anlagen können zu unterschiedlichen Zwecken konzipiert sein, wobei die Anlage beispielsweise eine, wie im Ausführungsbeispiel beschrieben, Messanlage sein kann oder aber auch eine Herstellungsanlage mit anderen Verbrauchern und Betriebsmodi sein kann.

## Patentansprüche

1. Verfahren zum Betreiben einer Anlage (10) mit einer Anzahl an Verbrauchern (32; 34; 42, 44; 52; 54; 62; 72; 82), wobei der Stromverbrauch der einzelnen Verbraucher (32; 34; 42, 44; 52; 54; 62; 72; 82) überwacht wird und die Energieversorgung der einzelnen Verbraucher (32; 34; 42, 44; 52; 54; 62; 72; 82) gesteuert wird,
**dadurch gekennzeichnet, dass**
mehrere erste Verbraucher (32; 34; 44; 52; 54; 62; 72; 82) einem ersten Schaltkreis (30) zugeordnet werden und mehrere zweite Verbraucher (42) einem zweiten Schaltkreis (40) zugeordnet werden, wobei bei Anforderung einer Bestromung beider Schaltkreise (30, 40) priorisiert der erste Schaltkreis (30) aktiviert wird und erst bei Unterschreiten eines vordefinierten Schwellenwertes des Stromverbrauchs des ersten Schaltkreises (30) der zweite Schaltkreis (40) aktiviert wird, wobei die Anlage (10) die Bestandteile eines Abgases analysiert, indem über Ventile (62, 72, 82) der Massenstrom des Abgases oder anderer zur Analyse des Abgases benötigter Gase geregelt wird, über Pumpen die Abgase durch die Leitung (16) der Anlage gefördert werden und über Messgeräte (32, 42, 52) die Bestandteile des Abgases analysiert werden.

2. Verfahren zum Betreiben einer Anlage nach Anspruch 1,
**dadurch gekennzeichnet, dass**
die zwei Schaltkreise (30, 40) über jeweils eine Steuerungseinheit (36, 46) aktiviert werden, wobei der Stromverbrauch des jeweiligen Schaltkreises (30, 40) überwacht und gesteuert wird.

3. Verfahren zum Betreiben einer Anlage nach Anspruch 1 oder 2,
**dadurch gekennzeichnet, dass**
bei einem Kaltstart die Anlage (10) aufgeheizt wird, indem priorisiert der erste Schaltkreis (30), der einen Heizkreis (34) aufweist, aktiviert wird und bei Unterschreiten des vordefinierten Schwellenwertes des Stromverbrauchs des ersten Schaltkreises (30) der zweite Schaltkreis (40) aktiviert wird.

4. Verfahren zum Betreiben einer Anlage nach Anspruch 3,
**dadurch gekennzeichnet, dass**
ein Heizsteuergerät (90) den Heizkreis (34) regelt, indem die zum Betreiben des Heizkreises (34) benötigte Gleichspannung abhängig von der benötigten Heizleistung variiert wird.

5. Verfahren zum Betreiben einer Anlage nach einem der vorhergehenden Ansprüche,
**dadurch gekennzeichnet, dass**
in einer Stand-By-Phase der Anlage (10) der erste Schaltkreis (30) aktiviert bleibt und der zweite Schaltkreis (40) deaktiviert wird.

6. Verfahren zum Betreiben einer Anlage nach Anspruch 5,
**dadurch gekennzeichnet, dass**
beim Umschalten von der Stand-By-Phase in eine Betriebsphase der erste Schaltkreis (30) aktiviert bleibt und bei Unterschreiten des vordefinierten Schwellenwertes des Stromverbrauchs des ersten Schaltkreises (30) der zweite Schaltkreis (40) aktiviert wird.

7. Verfahren zum Betreiben einer Anlage nach einem der vorhergehenden Ansprüche,
**dadurch gekennzeichnet, dass**
über eine Messung des Stromverbrauchs der Schaltkreise (30, 40) der Lüftungsbedarf der Anlage ermittelt wird, welcher über einen den Lüftungsbedarf regelnden Schaltkreis geregelt wird.

8. Verfahren zum Betreiben einer Anlage nach einem der vorhergehenden Ansprüche,
**dadurch gekennzeichnet, dass**
die Anlage mindestens drei Schaltkreise (30; 40; 50, 60; 70; 80) mit jeweils mindestens einem Verbraucher (32; 34; 42, 44; 52; 54; 62; 72; 82) aufweist, wobei die Schaltkreise (30; 40; 50, 60; 70; 80) bei Anforderung einer Bestromung aller Schaltkreise (30; 40; 50, 60; 70; 80) nacheinander und in Abhängigkeit der Stromverbräuche aktiviert werden.

9. Verfahren zum Betreiben einer Anlage nach einem der vorhergehenden Ansprüche,
**dadurch gekennzeichnet, dass**
die Verbraucher (32; 34; 42, 44; 52; 54; 62; 72; 82) mit einer Gleichspannung von 24V oder 48V Gleichspannung versorgt werden.

10. Verfahren zum Betreiben einer Anlage nach einem der vorhergehenden Ansprüche,
**dadurch gekennzeichnet, dass**
die Verbraucher (32; 34; 42, 44; 52; 54; 62; 72; 82) über Weitebereichsnetzteile mit elektrischer Energie versorgt werden.

## Claims

1. Method for operating a system (10) comprising a number of loads (32; 34; 42, 44; 52; 54; 62; 72; 82), wherein the power consumption of the individual loads (32; 34; 42, 44; 52; 54; 62; 72; 82) is monitored and the power supply to the individual loads (32; 34; 42, 44; 52; 54; 62; 72; 82) is controlled,
**characterized in that**
a plurality of first loads (32; 34; 44; 52; 54; 62; 72; 82) is associated to a first circuit (30) and a plurality of second loads (42) is associated to a second circuit (40), wherein, when an energization of both circuits (30, 40) is requested, the first circuit is activated with priority and the second circuit (40) is activated only when a predefined threshold value of the power consumption of the first circuit (30) is undershot, wherein the system (10) analyzes the components of an exhaust gas by regulating the mass flow of the exhaust gas or other gases required for analyzing the exhaust gas via valves (62, 72, 82), the exhaust gas are conveyed through the line (16) of the system by pumps, and the components of the exhaust gas are analyzed by measuring apparatus (32, 42, 52).

2. Method for operating a system according to claim 1, **characterized in that** the two circuits (30, 40) are activated via a respective control unit (36, 46), the power consumption of the respective circuit (30, 40) being monitored and controlled.

3. Method for operating a system according to claim 1 or 2, **characterized in that** upon a cold start, the system (10) is heated up by activating the first circuit (30), which has a heating circuit (34), with priority and activating the second circuit (40) when the predefined threshold value for the power consumption of the first circuit (30) is undershot.

4. Method for operating an installation according to claim 3, **characterized in that** a heating control device (90) regulates the heating circuit (34) by varying the DC voltage required to operate the heating circuit (34) in dependence on the required heating power.

5. Method for operating a system according to one of the preceding claims, **characterized in that** in a stand-by phase of the system (10), the first circuit (30) remains activated and the second circuit (40) is deactivated.

6. Method for operating an installation according to claim 5, **characterized in that** upon switching from the stand-by phase to an operating phase, the first circuit (30) remains activated and the second circuit (40) is activated when the predefined threshold value of the energy consumption of the first circuit (30) is undershot.

7. Method for operating a system according to one of the preceding claims, **characterized in that** a ventilation requirement of the system is determined by measuring the power consumption of the circuits (30, 40), which ventilation requirement is regulated by a circuit regulating the ventilation requirement.

8. Method for operating a system according to one of the preceding claims, **characterized in that** the system comprises at least three circuits (30; 40; 50, 60; 70; 80) each having at least one load (32; 34; 42, 44; 52; 54; 62; 72; 82), wherein the circuits (30; 40; 50, 60; 70; 80) can be activated one after the other and depending on the power consumptions, when a energization is required for all circuits (30; 40; 50, 60; 70; 80).

9. Method for operating a system according to one of the preceding claims, **characterized in that** the loads (32; 34; 42, 44; 52; 54; 62; 72; 82) are supplied with a DC voltage of 24V or a DC voltage of 48V.

10. Method for operating a system according to one of the preceding claims, **characterized in that** the loads (32; 34; 42, 44; 52; 54; 62; 72; 82) are supplied with electrical power via wide-range power supplies.

## Revendications

1. Procédé de fonctionnement d'une installation (10) comportant un nombre de consommateurs (32; 34; 42, 44; 52; 54; 62; 72; 82), la consommation électrique des consommateurs individuels (32; 34; 42, 44; 52; 54; 62; 72; 82) est surveillé et l'approvisionnement en énergie consommateurs individuels (32; 34; 42, 44; 52; 54; 62; 72; 82) est contrôlé,
**caractérisé en ce que**
plusieurs premiers consommateurs (32; 34; 44; 52; 54; 62; 72; 82) sont associés à un premier circuit (30) et plusieurs deuxièmes consommateurs (42) sont associés à un deuxième circuit (40), le premier circuit (30) étant activé avec priorité lors d'une alimentation des deux circuits (30, 40) est requise, et le deuxième circuit (40) étant activé uniquement lorsqu'une valeur de seuil prédéterminée de consommation électrique du premier circuit (30) est sous-dépassée, l'installation (10) analysant les composants d'un gaz d'échappement en régulant le débit massique des gaz d'échappement ou d'autres gaz nécessaires à l'analyse des gaz d'échappement via des soupapes (62, 72, 82), en transportant les gaz d'échappement à travers la conduite (16) de l'installation via des pompes et en analysant les composants du gaz d'échappement par des dispositifs de mesure (32, 42, 52).

2. Procédé de fonctionnement d'une installation selon la revendication 1, **caractérisé en ce que** les deux circuits (30, 40) sont chacun activés via une unité de commande (36, 46), la consommation électrique du circuit respectif (30, 40) étant surveillée et commandée.

3. Procédé de fonctionnement d'une installation selon la revendication 1 ou 2, **caractérisé en ce qu'en** cas de démarrage à froid, l'installation (10) est chauffée en activant le premier circuit (30), qui comporte un circuit de chauffage (34), avec priorité et activant le deuxième circuit (40) lorsque la valeur de seuil prédéterminée de consommation électrique du premier circuit (30) est sous-dépassée.

4. Procédé de fonctionnement d'une installation selon la revendication 3, **caractérisé en ce qu'**un dispositif de commande de chauffage (90) régule le circuit de chauffage (34) en faisant varier la tension continue nécessaire pour faire fonctionner le circuit de chauffage (34) en fonction de la puissance de chauffage requise.

5. Procédé de fonctionnement d'une installation selon l'une quelconque des revendications précédentes, **caractérisé en ce que** dans une phase d'attente de l'installation (10), le premier circuit (30) reste activé et le deuxième circuit (40) est désactivé.

6. Procédé de fonctionnement d'une installation selon la revendication 5, **caractérisé en ce que** lors du passage de la phase d'attente à une phase de fonctionnement, le premier circuit (30) reste activé et le deuxième circuit (40) est activé lorsque la valeur de seuil prédéterminée de consommation électrique du premier circuit (30) est sous-dépassée.

7. Procédé de fonctionnement d'une installation selon l'une quelconque des revendications précédentes, **caractérisé en ce que** le besoin de ventilation de l'installation est déterminé en mesurant la consommation électrique des circuits (30, 40), le besoin étant régulée par un circuit régulant le besoin de ventilation.

8. Procédé de fonctionnement d'une installation selon l'une quelconque des revendications précédentes, **caractérisé en ce que** l'installation comprend au moins trois circuits (30; 40; 50, 60; 70; 80) chacun avec au moins un consommateur (32; 34; 42, 44; 52; 54; 62; 72; 82), les circuits (30; 40; 50, 60; 70; 80) pouvant être activés les uns après les autres et en fonction des consommations électriques lorsqu'une énergisation de tous les circuits (30; 40; 50, 60; 70; 80) est requis.

9. Procédé de fonctionnement d'une installation selon l'une quelconque des revendications précédentes, **caractérisé en ce que** les consommateurs électriques (32; 34; 42, 44; 52; 54; 62; 72; 82) sont alimentés en une tension continue de 24V ou un tension continue de 48V.

10. Procédé de fonctionnement d'une installation selon l'une quelconque des revendications précédentes, **caractérisé en ce que** les consommateurs électriques (32; 34; 42, 44; 52; 54; 62; 72; 82) sont alimentés en énergie électrique via des alimentations électrique à large spectre.
